# EUROPEAN PATENT APPLICATION

(11) **EP 1 950 435 A1**
(43) Date of publication of application: **30.07.2008**
(21) Application number: 06823094.5
(22) Date of filing: 07.11.2006
(51) Int. Cl.: F16C 33/48, B60B 35/18, F16C 19/38, F16C 33/78, F16C 35/063

(54) **WHEEL BEARING DEVICE**

(30) Priority: 07.11.2005 JP 2005322323; 11.11.2005 JP 2005327434; 11.11.2005 JP 2005327436
(71) Applicant: NTN Corporation, Osaka-shi, Osaka-fu (JP)
(72) Inventor: UMEKIDA, Mitsuruc/o NTN Corporation, Shizuoka;4388510 (JP); KAWAMURA, Hiroshic/o NTN Corporation, Shizuoka;4388510 (JP); YAMAMOTO, Kazunaric/o NTN Corporation, Shizuoka;4388510 (JP)
(74) Representative: Cohausz & Florack
(86) International application number: PCT/JP2006/322190
(87) International publication number: WO 2007/052807

(57) **Abstract**

A bearing apparatus for a wheel of vehicle which can achieve easiness of assembly in an automatic assembling apparatus and greatly reduce the assembling steps. According to the present invention there is provided a bearing apparatus for a wheel of vehicle of a type of back-to-back double row tapered roller bearing comprising an outer member integrally formed on its outer surface with a body mounting flange to be mounted on a suspension apparatus of vehicle and also formed on its inner surface with double row outer raceway surfaces tapered open respectively axially inward and outward; an inner member including a hub wheel and an inner ring or an outer joint member of a constant velocity universal joint, the hub wheel having a wheel mounting flange integrally formed therewith at one end thereof and one inner raceway surface formed on the outer circumferential surface thereof arranged oppositely to one of the double row outer raceway surfaces and a cylindrical portion axially extending from said inner raceway surface, said inner ring or the outer joint member of a constant velocity universal joint being press fitted on the cylindrical portion and formed on its outer circumferential surface with the other inner raceway surface arranged opposite to the other raceway surface of the double row outer raceway surfaces; double row tapered rollers freely rollably held between the outer and inner raceway surfaces by cages; and seals arranged in annular openings formed by the outer and inner members at both ends thereof **characterized in that** said cages are formed of synthetic resin by injection molding; that posts between pockets of the cages are arranged to be positioned radially inward the pitch circle diameter of the tapered rollers; and that the width of an opening of radially inward of each pocket is set so that each tapered roller is held within the pocket with contacting tapered surfaces of the posts opened radially outward so as not to be fallen out radially inward.

## Description

### BACKGROUND OF THE INVENTION

### Field of the Invention

The present invention relates to a bearing apparatus having a tapered roller bearing for freely rotatably supporting a wheel of vehicle, and more particularly to a bearing apparatus for a wheel of vehicle intended to reduce the weight and size of the wheel bearing apparatus.

### Description of Background Art

In usual, the bearing apparatus for a wheel of vehicle is adapted to freely rotatably support a hub wheel for mounting the wheel via a rolling bearing and it is adopted an inner ring rotation type for a driving wheel and both inner ring rotation and outer ring rotation types for a driven wheel. Double row angular ball bearings are widely used in such a bearing apparatus from reasons that it has a desirable bearing rigidity, high durability against misalignment, and small rotation torque required for fuel consumption. On the contrary double row tapered roller bearings are widely used for off-road vehicles, trucks and heavy duty vehicles.

The bearing apparatus for a wheel of vehicle is broadly classified to a structure of first generation in which a wheel bearing of double row angular contact ball bearing is fitted between a knuckle forming part of a suspension and a hub wheel, a structure of second generation in which a body mounting flange or a wheel mounting flange is directly formed on the outer circumferential surface of an outer member, a structure of third generation in which one of the inner raceway surfaces is directly formed on the outer circumferential surface of the hub wheel, and a structure of fourth generation in which the inner raceway surfaces are directly formed on the outer circumferential surfaces of the hub wheel and the constant velocity universal joint.

In such a case since the bearing apparatus for a wheel of vehicle having a double row tapered roller bearing apparatus is usually used in heavy duty vehicles such as trucks it is not so much required to reduce the weight and size of the bearing apparatus, and thus it is the present situation that development of the double row tapered roller bearing apparatus has been stayed yet in use for the second generation structure as compared with the development of the double row angular ball bearing. However since demand for wagon type vehicles has increased in recently and thus multiple functions of vehicles are desired it has been desired to reduce the weight and size also in the double row tapered roller bearing apparatus having a large load capacity.

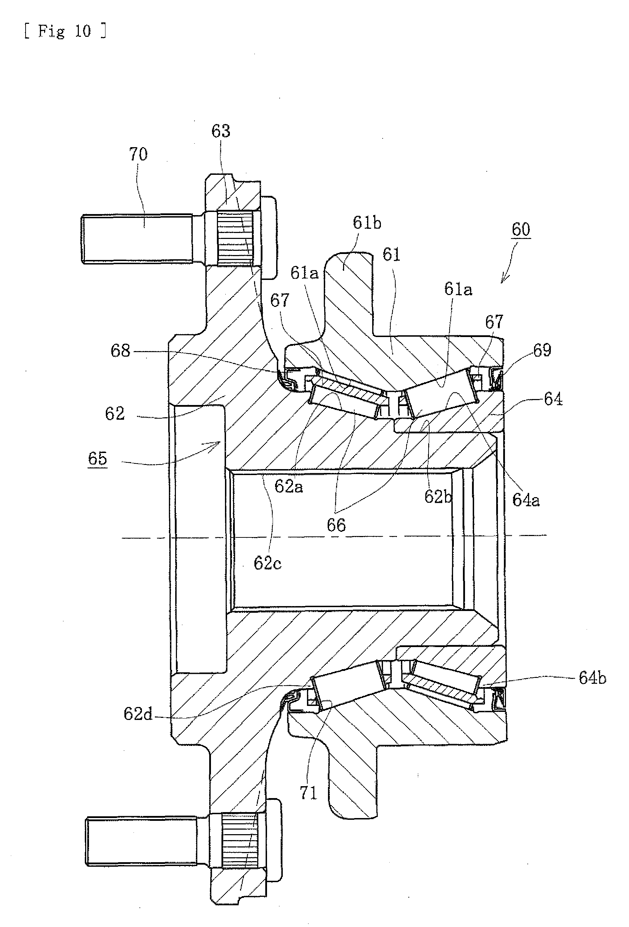

One example of the wheel bearing apparatus of the prior art is shown in Fig. 10. The bearing apparatus for a wheel of vehicle 60 is formed by a double row tapered roller bearing comprising an outer member 61 integrally formed on its outer circumferential surface with a body mounting flange 61b to be mounted on a knuckle (not shown) of a vehicle and on its inner circumferential surface with double row outer raceway surfaces 61a, 61a; an inner member 65 integrally formed on its outer circumferential surface with double row inner raceway surfaces 62a, 64a arranged oppositely to the double row outer raceway surfaces 61a, 61a; double row tapered rollers 66, 66 freely rollably contained between the outer raceway surfaces 61a, 61a and inner raceway surfaces 62a, 64a: and cages 67, 67 for freely rollably holding the double row tapered rollers 66, 66.

The inner member 65 comprises a hub wheel 62 having a wheel mounting flange 63 formed integrally therewith at one end thereof, one inner raceway surface 62a formed on the outer circumferential surface thereof oppositely to one of the double row outer raceway surfaces 61a, 61a, a cylindrical portion 62b axially extending from said one inner raceway surface 62a, and a serration 62c for torque transmission formed on the inner circumferential surface, and comprises an inner ring 64 press fitted on the cylindrical portion 62b and formed on its outer circumferential surface with the other inner raceway surface 64a oppositely to the other of the double row outer raceway surfaces 61a, 61a. Thus the inner member 65 forms the wheel bearing apparatus of the third generation structure for driving a driving wheel.

In addition hub bolts 70 are adapted to be mounted on the wheel mounting flange 63 equidistantly along its outer periphery. Furthermore seals 68, 69 are mounted in annular openings formed between the outer member 61 and the inner member 65 to prevent leakage of grease contained within the bearing apparatus and entering of rain water or dusts into the bearing apparatus from the outside.

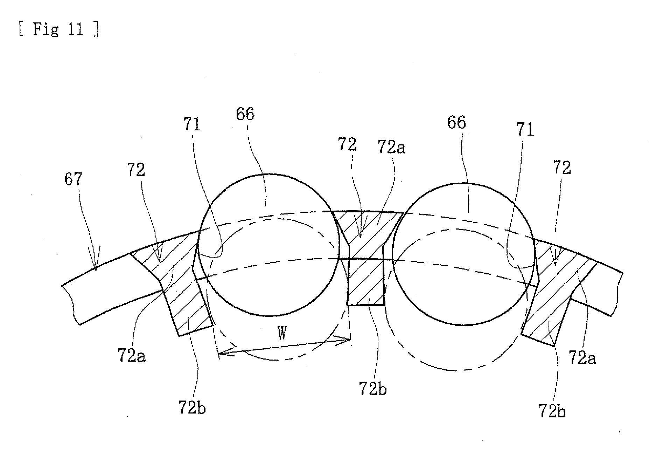

In such a structure large flanges 62d, 64 b for guiding the tapered rollers 66 are formed at larger side ends of the inner raceway surfaces 62a, 64a of hub wheel 62 and the inner ring 64 respectively. However any small flange is not formed at smaller side ends of the inner raceway surfaces 62a, 64a for preventing falling out of the tapered rollers. Accordingly the cages 67 keep the tapered rollers 66 in a falling out preventing condition within pockets 71 in a preassembling condition. That is, as shown in Fig. 11 the cage 67 is formed of synthetic resin by injection molding and posts 72 between mutually adjacent pockets 71, 71 are formed so that each of them has a trapezoidal cross section such that radially outward portion 72a is tapered convergent toward radially inward and a radially inward projection 72b is integrally formed therewith.

The width of a pocket 71 between the radially outward portions 72a, 72a is set so that the tapered roller 66 cannot fall out radially outward with it being contacted by the tapered surfaces of the posts 72. On the other hand the width "W" between the radially inward projections 72b, 72b is set so that it is slightly smaller than the diameter of the tapered roller 66 such that each tapered roller 66 can be press fitted in to the pocket 71 from radially inward and it cannot inadvertently fall out radially inward with it being contacted by the radially inward projections 72b as shown by a two-dot chain line. Such a structure of the cage 67 enables not only to reduce the number of parts and manufacturing cost but to make easy the assembly of the bearing apparatus in an automatic assembling apparatus as well as to eliminate assembling steps of the bearing apparatus (see Japanese Laid-open Patent Publication No. 44322/1999).

### SUMMARY OF THE INVENTION

### Disclosure of the Invention

### Problems to be solved by the Invention

In such a wheel bearing apparatus 60 of the prior art the cages 67 are formed so that the radially inward projections 72b of them prevent inadvertent falling out of the tapered rollers 66 radially inward with the rollers 66 being contacted by the radially inward projections 72b. However if the width "W" between the mutually adjacent projections 72b, 72b is set small it will be difficult to push the rollers 66 into the pockets 71. Accordingly the entrance width "W" of balls should be strictly formed at the predetermined dimension without dimensional variation in order to surely prevent the falling out of the tapered rollers 66. However ability of injection molding of the cages 67 to achieve strict dimensional accuracy of the width "W" in mass production is limited. In addition since the cage 67 is a type in which the rollers 66 can be inserted into the pockets 71 by elastically deforming the radially inward projections 72b, it is difficult to simultaneously insert the rollers 66 into the pockets 71 and the number of assembling steps is increased. Thus it is difficult to achieve easiness of assembly in an automatic assembling apparatus as well as to greatly reduce the assembling steps.

It is, therefore, an object of the present invention to provide a bearing apparatus for a wheel of vehicle which can achieve easiness of assembly in an automatic assembling apparatus as well as to greatly reduce the assembling steps.

Also it is an object to provide a bearing apparatus for a wheel of vehicle which can improve sealing ability of the bearing apparatus.

In addition it is an object to provide a bearing apparatus for a wheel of vehicle which can reduce the weight and the size and increase the rigidity of the bearing apparatus.

### Means for solving the problems

For achieving the object of the present invention, there is provided according to the present invention a bearing apparatus for a wheel of vehicle of a type of back-to-back double row tapered roller bearing comprising: an outer member integrally formed on its outer surface with a body mounting flange to be mounted on a suspension apparatus of vehicle and also formed on its inner surface with double row outer raceway surfaces tapered open respectively axially inward and outward; an inner member including a hub wheel and an inner ring or an outer joint member of a constant velocity universal joint, the hub wheel having a wheel mounting flange integrally formed therewith at one end thereof and one inner raceway surface formed on the outer circumferential surface thereof arranged oppositely to one of the double row outer raceway surfaces and a cylindrical portion axially extending from said inner raceway surface, said inner ring an inner ring or the outer joint member of a constant velocity universal joint being press fitted on the cylindrical portion and formed on its outer circumferential surface with the other inner raceway surface arranged opposite to the other raceway surface of the double row outer raceway surfaces; double row tapered rollers freely rollably held between the outer and inner raceway surfaces by cages; and seals arranged in annular openings formed by the outer and inner members at both ends thereof **characterized in that** said cages are formed of synthetic resin by injection molding; that posts between pockets of the cages are arranged to be positioned radially inward the pitch circle diameter of the tapered rollers; and that the width of an opening of radially inward of each pocket is set so that each tapered roller is held within the pocket with contacting tapered surfaces of the posts opened radially outward so as not to be fallen out radially inward (claiml).

According to the bearing apparatus for a wheel of vehicle of a type of back-to-back double row tapered roller bearing having a structure for the third or fourth generation type comprising an outer member integrally formed on its outer surface with a body mounting flange and on its inner surface with double row outer raceway surfaces; an inner member including a hub wheel having a wheel mounting flange integrally formed therewith at one end thereof and one inner raceway surface formed on the outer circumferential surface or an outer joint member of a constant velocity universal joint; double row tapered rollers freely rollably held between the outer and inner raceway surfaces by cages; and seals arranged in annular openings formed by the outer and inner members at both ends thereof, since said cages are formed of synthetic resin by injection molding, posts between pockets of the cages are arranged to be positioned radially inward the pitch circle diameter of the tapered rollers, and the width of an opening of radially inward of each pocket is set so that each tapered roller is held within the pocket with contacting tapered surfaces of the posts opened radially outward so as not to be fallen out radially inward, it is possible to surely prevent falling out of the tapered rollers from the cages by holding the tapered rollers by the outer raceway surfaces of the outer member and the cages without strict control of the dimensionnal accuracy of the cages and accordingly it is also possible to achieve easiness of assembly in an automatic assembling apparatus as well as to greatly reduce the assembling steps.

There is also provided a bearing apparatus for a wheel of vehicle of a type of back-to-back double row tapered roller bearing comprising: an outer member integrally formed on its outer surface with a body mounting flange to be mounted on a suspension apparatus of vehicle and also formed on its inner surface with double row outer raceway surfaces tapered open respectively axially inward and outward; an inner member including a hub wheel and an inner ring or an outer joint member of a constant velocity universal joint, the hub wheel having a wheel mounting flange integrally formed therewith at one end thereof and one inner raceway surface formed on the outer circumferential surface thereof arranged oppositely to one of the double row outer raceway surfaces and a cylindrical portion axially extending from said inner raceway surface, said inner ring being press fitted on the cylindrical portion and formed on its outer circumferential surface with the other inner raceway surface arranged opposite to the other raceway surface of the double row outer raceway surfaces; double row tapered rollers freely rollably held between the outer and inner raceway surfaces by cages; and seals arranged in annular openings formed by the outer and inner members at both ends thereof **characterized in that** said cages are formed of synthetic resin by injection molding, that the tapered rollers are held within the pocket so as not to be fallen out radially inward, and that larger flanges for guiding the tapered rollers are integrally formed on larger diameter sides of the outer raceway surfaces of the outer member (claim 2).

According to the bearing apparatus for a wheel of vehicle of a type of back-to-back double row tapered roller bearing having a structure for the third or fourth generation type comprising an outer member integrally formed on its outer surface with a body mounting flange and on its inner surface with double row outer raceway surfaces; an inner member including a hub wheel having a wheel mounting flange integrally formed therewith at one end thereof and one inner raceway surface formed on the outer circumferential surface or an outer joint member of a constant velocity universal joint; double row tapered rollers freely rollably held between the outer and inner raceway surfaces by cages; and seals arranged in annular openings formed by the outer and inner members at both ends thereof, since said cages are formed of synthetic resin by injection molding, the tapered rollers are held within the pocket so as not to be fallen out radially inward, and larger flanges for guiding the tapered rollers are integrally formed on larger diameter sides of the outer raceway surfaces of the outer member, it is possible to surely prevent falling out of the tapered rollers from the cages during assembly of the bearing apparatus and it is also possible to prevent the seals from being interfered by movement of the cages under a condition in which the roller assembly is inserted into the outer member. Accordingly it is possible to provide a wheel bearing apparatus which can improve the easiness of assembly of the bearing apparatus and the sealing ability.

Further according to the present invention there is provided a bearing apparatus for a wheel of vehicle formed as a unit of a hub wheel, a rolling bearing and a constant velocity universal joint comprising: an outer member formed on its inner surface with double row outer raceway surfaces; an inner member including a hub wheel and an outer joint member, the hub wheel having a wheel mounting flange integrally formed therewith at one end thereof and one inner raceway surface formed on the outer circumferential surface thereof arranged oppositely to one of the double row outer raceway surfaces and a cylindrical portion axially extending from said inner raceway surface, said outer joint member fitted into the hub wheel and formed on its outer circumferential surface with the other inner raceway surface arranged opposite to the other raceway surface of the double row outer raceway surfaces and having a shaft portion axially extending from said other inner raceway surface; and double row rolling elements freely rollably held between the outer and inner raceway surfaces **characterized in that** a pitch circle diameter of outer side rolling elements of the double row rolling elements is different from that of inner side rolling elements of the double row rolling elements; and that the number of the rolling elements in the larger pitch circle diameter is set larger than that of the rolling elements in the smaller pitch circle diameter (claim 3). Accordingly it is possible to provide a wheel bearing apparatus which can increase the rigidity and also reduce the weight and size of the wheel bearing apparatus.

In the present invention it is preferable that the inner member comprises the hub wheel and the outer joint member fitted into the hub wheel; that the outer joint member is integrally formed of a cup-shaped mouth portion, a shoulder portion on which outer circumferential surface said other inner raceway surface is directly formed, and a shaft portion axially extending from the shoulder portion, and that the hub wheel and the outer joint member are united by plastically deforming a hollow end of the shaft portion and caulking it on the hub wheel (claim 4). According to such a structure since the hub wheel and the outer joint member are united via plastically deformed connection, it is possible to eliminate the pre-load amount by adjusting fastening amount of nut as a conventional manner. Thus it is possible to maintain the pre-load amount for a long term and to increase the strength and durability of the hub wheel.

It is also preferable that the hub wheel and the outer joint member are united by expanding radially outward the hollow end of the shaft portion of the outer joint member and biting it into a hardened irregular portion formed on an inner circumferential surface of the hub wheel (claim 5). This structure enables to further reduce the weight and size of the bearing apparatus due to the plastically deformed connection between the hub wheel and the outer joint member.

It is preferable that the inner member comprises the hub wheel and the inner ring press fitted on the cylindrical portion of the hub wheel via a predetermined interference, and that an inner side base portion of the wheel mounting flange is rounded and its surface on which the seal is directly contact is hardened (claim 6). Such a structure enables to reduce the size of the bearing apparatus and to obtain a sufficient mechanical strength against the rotary bending load applied to the wheel mounting flange.

It is also preferable that at least an inner side seal comprises a slinger press fitted onto the inner member, and an annular sealing plate including a metal core press fitted into the outer member and a sealing member integrally adhered to the metal core via vulcanized adhesion, and that each of the slinger and the metal core has a substantially "L" shaped cross section and they are arranged oppositely toward each other so that the sealing member slidingly contacts the slinger (claim 7). This structure enables to keep a high sealing ability for a long term.

It is preferable that at least the rolling elements of the smaller pitch circle diameter of the double row rolling elements are tapered rollers (claim 8). This structure enables to keep a high rigidity of the wheel bearing apparatus.

It is preferable that the double row rolling elements are tapered rollers each having same specifications (claim 9). This enables to eliminate erroneous assembly of the tapered rollers and thus to reduce the manufacturing cost and to improve the reliability of the bearing apparatus.

It is also possible that the rolling elements of the larger pitch circle diameter of the double row rolling elements are balls (claim 10). This enables to further reduce the axial size of the wheel bearing apparatus with keeping balance of the loading capacity or the rigidity of the double bearing rows.

### Best mode for carrying out the Invention

The best mode for carrying out the present invention is a bearing apparatus for a wheel of vehicle of a type of back-to-back double row tapered roller bearing comprising: an outer member integrally formed on its outer surface with a body mounting flange to be mounted on a suspension apparatus of vehicle and also formed on its inner surface with double row outer raceway surfaces tapered open respectively axially inward and outward; an inner member including a hub wheel and an outer joint member of a constant velocity universal joint, the hub wheel having a wheel mounting flange integrally formed therewith at one end thereof and one inner raceway surface formed on the outer circumferential surface thereof arranged oppositely to one of the double row outer raceway surfaces and a cylindrical portion axially extending from said inner raceway surface, said outer joint member of the constant velocity universal joint being press fitted on the cylindrical portion and formed on its outer circumferential surface with the other inner raceway surface arranged opposite to the other raceway surface of the double row outer raceway surfaces; double row tapered rollers freely rollably held between the outer and inner raceway surfaces by cages; and seals arranged in annular openings formed by the outer and inner members at both ends thereof **characterized in that** the outer joint member is formed of a shoulder portion on which outer circumferential surface said other inner raceway surface is directly formed and of a cylindrical shaft portion axially extending from the shoulder portion, that the hub wheel and the outer joint member are united by expanding radially outward the hollow end of the shaft portion of the outer joint member and biting it into a hardened irregular portion formed on an inner circumferential surface of the hub wheel, that said cages are formed of synthetic resin by injection molding, that posts between pockets of the cages are arranged to be positioned radially inward the pitch circle diameter of the tapered rollers; and that the width of an opening of radially inward of each pocket is set so that each tapered roller is held within the pocket with contacting tapered surfaces of the posts opened radially outward so as not to be fallen out radially inward.

### DESCRIPTION OF THE PREFERRED EMBODIMENTS

### First embodiment

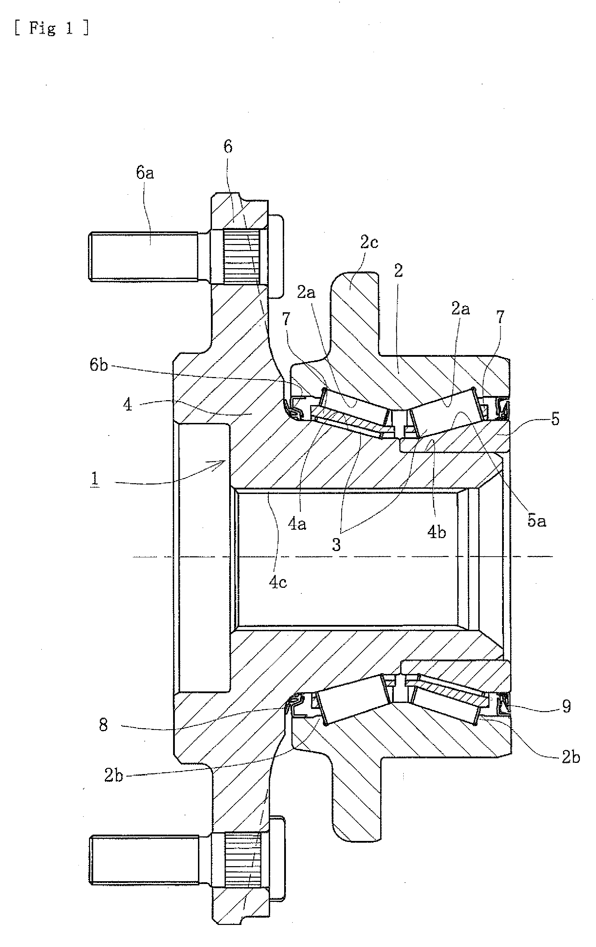

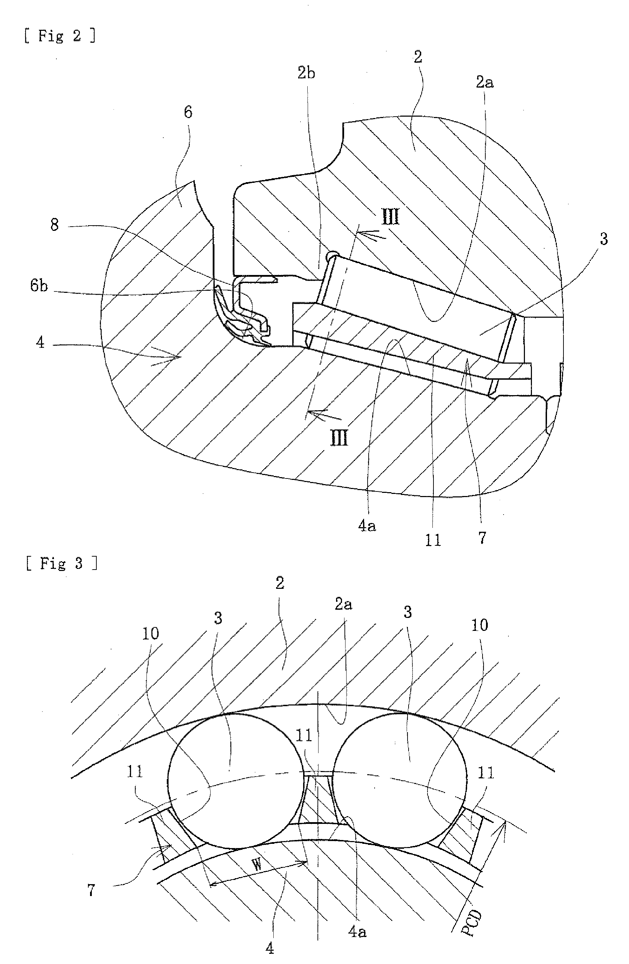

Preferable embodiments of the present invention will be hereinafter described with reference to the drawings. Fig. 1 is a longitudinal section view showing a first embodiment of the bearing apparatus for a wheel of vehicle of the present invention, Fig. 2 is a partially enlarged view of Fig. 1, and Fig. 3 is an enlarged cross sectional view taken along a line III-III of Fig. 2. In the description below, a term "outer side" (left hand side in the drawings) of the apparatus denotes a side which is positioned outside of the vehicle body and a term "inner side" (right hand side in the drawings) of the apparatus denotes a side which is positioned inside of the body when the bearing apparatus is mounted on the vehicle body.

This wheel bearing apparatus shown in Fig. 1 is a third generation type used for a driving wheel and comprises an inner member 1, an outer member 2, and double row tapered rollers 3, 3 for rollably contained between the inner and outer members 1, 2. The inner member 1 comprises the hub wheel 4 and an inner ring 5 press fitted on the hub wheel 4 with a predetermined interference.

The hub wheel 4 is integrally formed with a wheel mounting flange 6 at its one end, one (outer side) tapered inner raceway surface 4a on the outer circumferential surface, a cylindrical portion 4b axially extending from the inner raceway surface 4a, and a serration (or spline) 4c on the inner circumferential surface. Hub bolts 6a are arranged on the wheel mounting flange 6 equidistantly along the periphery of the wheel mounting flange 6. The inner ring 5 is formed on its outer circumferential surface with the other (inner side) tapered inner raceway surface 5a and adapted to be press fitted on the cylindrical portion 4b of the hub wheel 4. The inner ring 5 and the tapered rollers 3 are made of high carbon chrome bearing steel such as SUJ 2 and hardened to their core by dipping quenching as having hardness of 58□64 HRC. No large flange for guiding rollers or small flange for holding rollers of the prior art is formed on both ends of the inner raceway surfaces 4a, 5a of the hub wheel 4 and the inner ring 5. In stead large flanges 2b are integrally formed on the outer raceway surfaces 2a, 2a of the outer member 2 which will be described later.

The hub wheel 4 is made of medium/high carbon steel including carbon of 0.40~0.80 % by weight such as S53C and hardened by high frequency induction quenching so that a region including the inner raceway surface 4a, a circular arc base 6b formed inner side of the wheel mounting flange 6 and the cylindrical portion 4b has surface hardness of 58~64 HRC. Accordingly wear resistance of the base 6b forming a seal land portion of the seal 8 is improved and the wheel mounting flange 6 has a sufficient mechanical strength against the rotary bending load applied thereto and the anti-fretting strength of the cylindrical portion 4b at a region press fitted by the inner ring 5 can be improved.

The outer member 2 is integrally formed on its outer circumferential surface with a body mounting flange 2c to be mounted on a knuckle (not shown) of a vehicle and on its inner circumferential surface with tapered outer raceway surfaces 2a, 2a outwardly opened and arranged oppositely to the double row inner raceway surfaces 4a, 5a of the inner member 1. Double tapered rollers 3, 3 are contained between these outer and inner raceway surfaces and rollably held by cages 7, 7. The outer member 2 is made of medium/high carbon steel including carbon of 0.40~0.80 % by weight such as S53C and the double row outer raceway surfaces 2a, 2a are hardened by high frequency induction quenching so as to have a surface hardness of 58-64 HRC.

Seals 8, 9 are mounted within annular spaces formed between the outer member 2 and the inner member 1. Concretely, seals 8, 9 are formed by a so-called pack seal in which the outer side seal 8 sliding contacts the base 6b of the wheel mounting flange 6 and the inner side seal 9 is mounted on the inner circumferential surface of the outer member 2 and on the outer circumferential surface of the inner ring 5. These seals 8, 9 prevent leakage of grease contained in the bearing and entering of rain water and dusts into the bearing from outside. Although the structure shown here is that of third generation bearing for a driving wheel, the present invention is not limited to use for a driving wheel and can be applied to use for a driven wheel if the bearing apparatus has a construction in which the inner raceway surfaces are formed on the hub wheel.

According to the first embodiment of the present invention the outer member 2 is integrally formed on the larger diameter end of the outer raceway surface 2a with the large flange 2b as shown in an enlarged view of Fig. 2 and the outer side seal 8 is fitted on the inner circumferential surface of the large flange 2b. The cages 7 are formed by injection molding of base thermoplastic resin such as PA (polyamide) 66 into which reinforcing material such as GF (glass fiber) is added. Each cage 7 is constructed as shown in Fig. 3 so that the posts 11 between mutually adjacent pockets 10, 10 of the cage 7 are arranged to be positioned radially inward the pitch circle diameter (PCD) of the tapered rollers 3 and that the width "W" of an opening of radially inward of each pocket 10 is set so that each tapered roller 3 is held within the pocket with contacting tapered surfaces of the posts 11 opened radially outward so as not to be fallen out radially inward. Accordingly this surely makes it possible to prevent the tapered rollers 3 from being fallen out from the cages 7 by holding the rollers 3 with the outer raceway surfaces 2a of the outer member 2 without strictly controlling the dimensional accuracy of the cages 7.

The assembly of the bearing can be easily achieved only by inserting or fitting the posts 11 of the cage 7 between the adjacent rollers 3 from radially inward so that the rollers 3 are simultaneously fitted into the pockets 10, and then by inserting the hub wheel 4 and the inner ring 5 from both sides of the outer member 2 in which the taper rollers are assembled. Thus it is possible to achieve easy assembly in an automatic assembling apparatus and to substantially reduce the assembling steps.

In addition since the large flange 2b for guiding the rollers 3 is formed on the larger diameter side of the outer raceway surface 2a of the outer member 2, the cage 7 cannot axially move toward the seal 8 as in the prior art under a condition in which the tapered rollers 3 are assembled in the outer member 2. Thus it is possible to prevent the seal 8 from being interfered by the cage 7 and accordingly from being deformed or damaged and thus detracted from the sealing ability.

### Second embodiment

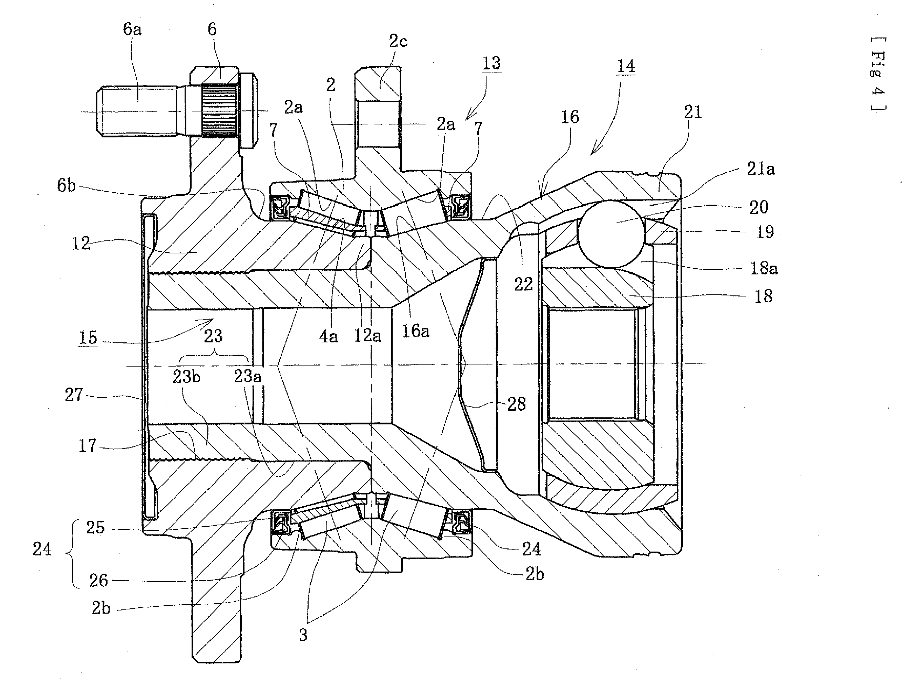

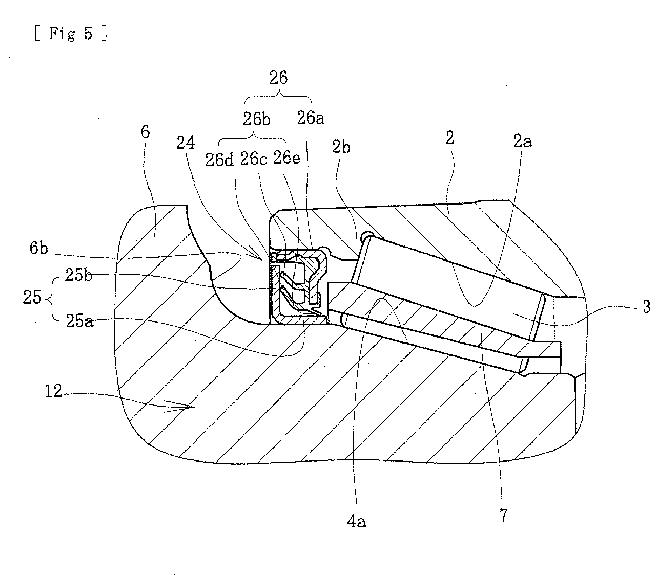

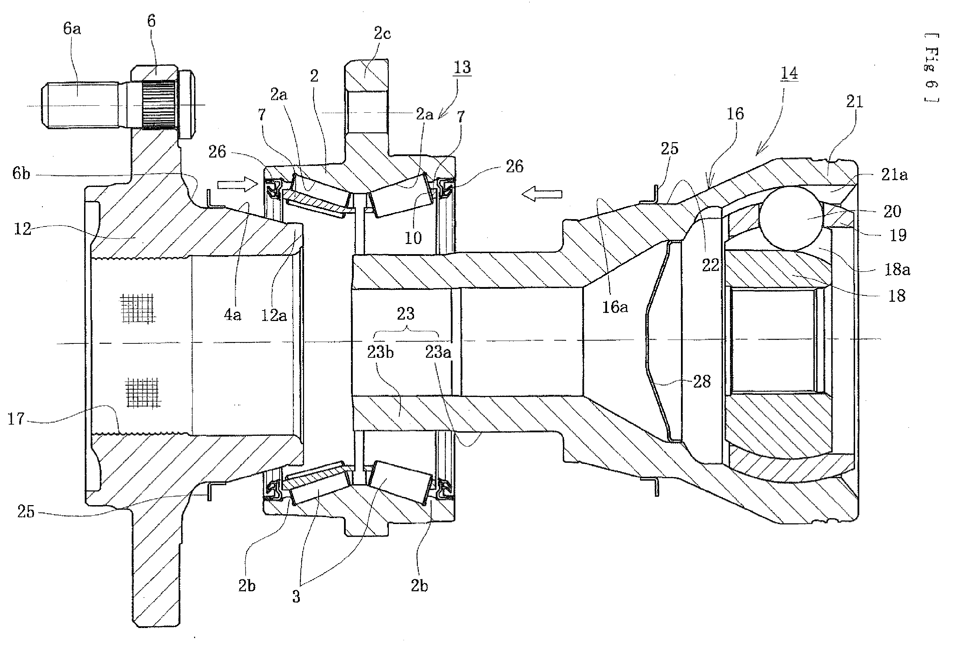

Fig. 4 is a longitudinal section view showing a second embodiment of the bearing apparatus for a wheel of vehicle of the present invention, Fig. 5 is a partially enlarged view of Fig. 4, and Fig. 6 is an explanatory view showing a method for assembling the bearing apparatus for a wheel of vehicle of the present invention. Same reference numerals are used herein for designating same parts as those having same functions used in the first embodiment.

This wheel bearing apparatus is a fourth generation type and formed as a unit of an hub wheel 12, a double row rolling bearing 13 and a constant velocity universal joint 14. The double row rolling bearing 13 comprises an inner member 15, the outer member 2, and double row tapered rollers 3, 3 for rollably contained between the inner and outer members 15, 2. The inner member 15 comprises the hub wheel 12 and an outer joint member 16 fitted into the hub wheel 12 and connected thereto via plastic deformation of the outer joint member 16.

The hub wheel 12 is integrally formed with a wheel mounting flange 6 at its one end, one (outer side) tapered inner raceway surface 4a on the outer circumferential surface, a cylindrical portion 12a axially extending from the inner raceway surface 4a. The hub wheel 12 is made of medium/high carbon steel including carbon of 0.40~0.80 % by weight such as S53C and hardened by high frequency induction quenching so that a region including the inner raceway surface 4a, the inner side base 6b inner side of the wheel mounting flange 6 and the cylindrical portion 12a has surface hardness of 58□64 HRC. Accordingly the hub wheel 12 has a sufficient mechanical strength against the rotary bending load applied to the wheel mounting flange 6.

The inner circumferential surface of the hub wheel 12 is formed with an irregular portion 17 which is heat treated as having surface hardness of HRC 54~64. It is preferable to use as the heat treatment high frequency induction heating which can easily carry out local heating and setting of the depth of the hardened layer. The irregular portion 17 is formed as having a crisscross pattern knurl comprising an orthogonally crossed grooves formed by a plurality of independent annular grooves formed e.g. by turning and a plurality of axial grooves formed by broaching, or a crossing groove formed by mutually inclined spiral grooves. Preferably each tip projection of the irregular portion 17 is formed by a pointed configuration such as a pyramid.

The constant velocity universal joint 14 comprises the outer joint member 16, a joint inner ring 18, a cage 19 and torque transmitting balls 20. The outer joint member 16 is made of medium carbon steel including carbon of 0.40~0.80 % by weight such as S53C and integrally formed by a cup shaped mouth portion 21, a shoulder 22 forming a bottom of the mouth portion 21, and a cylindrical shaft portion 23 axially extending from the shoulder 22. The shaft portion 23 is formed by a spigot portion 23a fitted in the hub wheel 12 via a predetermined radial gap and a fitting portion 23b at the end of the spigot portion 23a.

An inner surface of the mouth portion 21 is formed with curved track grooves 21a and an outer surface of the joint inner ring 18 is formed with track grooves 18a corresponding to the track grooves 21a. The torque transmitting balls 20 are contained between the track grooves 21a, 18a via the cage19. An outer circumferential surface of the shoulder 22 is formed with an inner side tapered inner raceway surface 16c opposed to one of the double row outer raceway surface 2a, 2a. The track grooves 21a and a region including a seal fitted portion to which a seal 24 mentioned later sliding contacts, the inner raceway surface 16a and the shaft portion 23 are hardened by the high frequency induction heating as having a surface hardness of 58-64 HRC and the fitting portion 23b of the shaft portion 23 is kept as a no-quenched portion after being forged.

A plurality of the double row tapered rollers 3, 3 are contained between the double row outer raceway surfaces 2a, 2a and the double row inner raceway surfaces 4a, 16a opposite to the double row outer raceway surfaces 2a, 2a and held freely rollably therein by the cages 7, 7. The seals 24, 24 are mounted on both ends of the outer member 2 and prevent leakage of grease contained in the bearing and entering of rain water and dusts into the bearing from outside. The double row rolling bearing 13 forms a so-called back-to-back double row tapered roller bearing in which smaller the distance of line of action of force applied to both raceway surfaces 2a, 4a and 2a, 16a from the axial center, larger the distance between the rollers in their axial direction.

Similarly to the first embodiment large flanges 2b for guiding the tapered rollers 3 are formed at larger side ends of the outer raceway surfaces 2a of the outer member 2 and no small flange for holding rollers and large flange for guiding rollers is formed at both side ends of the inner raceway surfaces 4a, 16a of the hub wheel 12 and the outer joint member 16. And the posts 11 of the cages 7 are positioned radially inward the pitch circle diameter of the tapered rollers 3 and thus prevent the tapered rollers 3 from being fallen out from the cages 7.

As shown in an enlarged view of Fig. 5 the seal 24 is formed as a so-called pack seal comprising a slinger 25 having press fitted on the base 6b of the wheel mounting flange and an annular sealing plate 26 a substantially "L" shaped cross section press fitted in the large flange 2b of the outer member 2 oppositely to the slinger 25 and having a sealing member. This enables to prevent the sealing plate 26 from being interfered by cage 7 and thus from being deformed or damaged.

The slinger 25 is made of an austenitic stainless steel sheet (JIS SUS 304 etc.) or a preserved cold rolled sheet (JIS SPCC etc.) and formed as having a substantially "L" shaped cross section by press forming said sheet and comprises a cylindrical portion 25a fitted on the base 6b (shoulder 22) and a standing portion 25b extending radially outward from the cylindrical portion 25a.

On the other hand the sealing plate 26 comprises a metal core 26a fitted in the end of the outer member 2 and a sealing member 26b integrally adhered to the metal core 26a via vulcanized adhesion. The metal core 26a is made of an austenitic stainless steel sheet (JIS SUS 304 etc.) or a preserved cold rolled sheet (JIS SPCC etc.) and formed by press forming. The sealing member 26b comprises a pair of side lips 26c, 26d sliding contacting the standing portion 25b of the slinger 25 and a radial lip 26e sliding contacting the cylindrical portion 25a of the slinger 25.

Then a method for assembling the wheel bearing apparatus of the present embodiment will be described with reference to Fig. 6. Firstly the cages 7 are elastically deformed and fitted in the outer member 2 from radially inward with the tapered rollers 3, 3 being arranged in rows on the outer raceway surfaces 2a, 2a of the outer member 2 and arranging the pockets 10 of the cages corresponding to the double row tapered rollers 3, 3. Then the sealing plates 26 forming the seal 24 are fitted within both ends of the outer member 2. Then slingers 25 forming seal 24 are press fitted respectively on the base 6b of the wheel mounting flange 6 and the shoulder 22 of the outer joint member 16 and then the hub wheel 12 and the outer joint member 16 are fitted in the outer member 2 along directions shown by arrows in Fig. 6. Then the shaft portion 23 of the outer joint member 16 is fitted in the hub wheel 12 until the end face of the cylindrical portion 12a of the hub wheel 12 abuts the shoulder 22 of the outer joint member 16. Finally an expanding tool such as a mandrel is pushed into a bore of a fitting portion 23b of the shaft portion 23 to radially expand the fitting portion 23b in order to bite the outer circumferential surface of the fitting portion 23b into the irregular portions 17 of the hub wheel 12. Thus the hub wheel 12 and the outer joint member 16 are integrally united via plastic deformation of the fitting portion 23b.

This structure enables to eliminate necessity to control the amount of pre-load by fastening the outer joint member using a nut in the prior art and thus it is possible to reduce the weight and size of the bearing apparatus and increase the strength and durability of the hub wheel 12 and to keep the amount of pre-load for a long term. End caps 27, 28 are mounted respectively on openings of the hub wheel 12 and the hollow shaft portion 23 of the outer joint member 16 to prevent entering of rain water and dusts into the bearing from outside and leakage of grease contained in the bearing (see Fig. 4).

In the double row rolling bearing comprising double row tapered roller bearing 13, since the tapered rollers 3, 3 tend to rub the raceway surfaces along their generating lines during assembly of the bearing, it is difficult to keep a stable inside gap of the bearing during the radially enlarging and caulking step. That is, grease would be expelled from the line contacting region and cause metal-to-metal contact and thus increase the frictional coefficient in the contacting portions. Accordingly it is afraid that the tapered rollers 3, 3 would not smoothly move toward the large flanges 2b, 2b and thus would be assembled in a misaligned condition. For example the inside gap would be a positive gap when a negative gap has to be obtained and thus there would be caused a case in which a desirable pre-load cannot be applied. This would be further remarkable when the center line of each tapered roller 3 is inclined relative to its ordinal rotation axis, i.e. when a so-called skew is generated.

In order to avoid such a problem the plastic deformation connection in the radially enlarging and caulking step is carried out with causing a relative swing motion (reciprocal motion) or a rotation (one way rotation) between the hub wheel 12 and outer joint member 16 and the outer member 2 in the present embodiment. In practice the hub wheel 12 and the shaft portion 23 of the outer joint member 16 are united via plastic deformation by inserting the enlarging tool into the shaft portion 23 with the outer member 2 being reciprocated relative to the hub wheel 12 under a condition of supporting the hub wheel 12 on a top surface of a working bench. This enables the double row tapered rollers 3, 3 to smoothly slide on the raceway surfaces and to be stably aligned to the large flanges 2b, 2b. Accordingly a predetermined pre-load can be applied accurately.

Although it is shown that the hub wheel 12 and the outer joint member 16 are united via plastic deformation by deforming the shaft portion of the outer joint member radially outward, it is also possible to unite the hub wheel 12 and the outer joint member 16 by inserting the shaft portion of the outer joint member into the hub wheel and by plastically deforming the end of the shaft portion to a direction other than radially outward to form a caulking portion in order to axially secure the hub wheel and the outer joint member (i.e. a so-called swing caulking method).

### Third embodiment

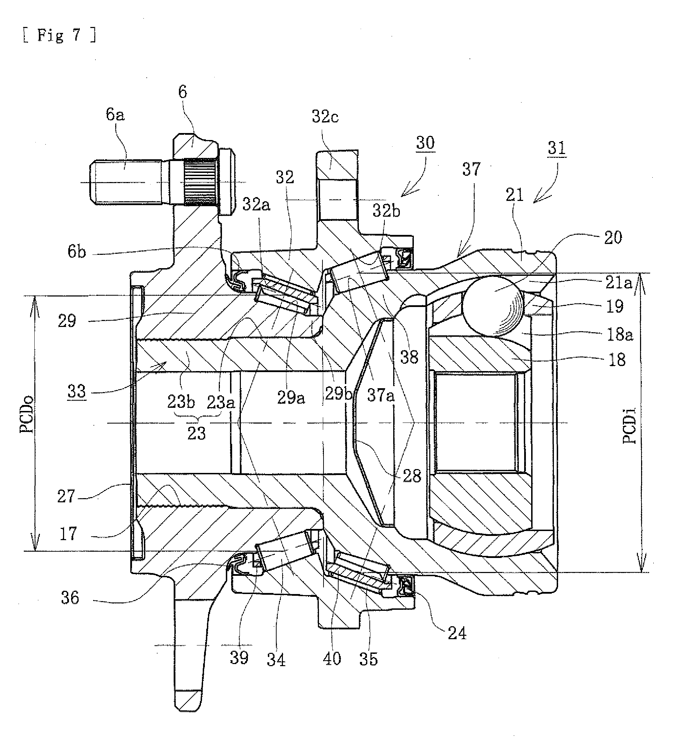

Fig. 7 is a longitudinal section view showing a third embodiment of the bearing apparatus for a wheel of vehicle of the present invention. Same reference numerals are used herein for designating same parts as those having same functions used in the previous embodiments.

This wheel bearing apparatus is formed as a unit of an hub wheel 29, a double row rolling bearing 30 and a constant velocity universal joint 31. A double row rolling bearing 30 comprises an outer member 32, an inner member 33, and double row tapered rollers 34, 35. The inner member 33 comprises the hub wheel 29 and an outer joint member 37 fitted into the hub wheel 29.

The outer member 32 is made of medium/high carbon steel including carbon of 0.40~0.80 % by weight such as S53C and is integrally formed on its outer circumferential surface with a body mounting flange 32c and on its inner circumferential surface with tapered outer raceway surfaces 32a, 32b. The double row outer raceway surfaces 32a, 32b are hardened by high frequency induction quenching so as to have a surface hardness of 58~64 HRC.

On the other hand the hub wheel 29 is made of medium/high carbon steel including carbon of 0.40~0.80 % by weight such as S53C and is integrally formed with a wheel mounting flange 6 at its outer side end. A plurality of hub bolts 6a are mounted on the wheel mounting flange 6 equidistantly along the periphery thereof. The hub wheel 29 is formed on its outer circumferential surface with one (i.e. outer side) tapered inner raceway surface 29a arranged oppositely to one of the double row outer raceway surfaces 32a, 32b and a cylindrical portion 29b axially extending from said inner raceway surface 29a. The hub wheel 4 is hardened by high frequency induction quenching so that a region including a seal land portion 6b to which the outer side seal 36 sliding contacts, the inner raceway surface 29a and the cylindrical portion 29b has surface hardness of 58-64 HRC. Accordingly not only wear resistance of the base 6b forming the seal land portion of the outer side seal 36 is improved but the hub wheel 29 has a sufficient mechanical strength against the rotary bending load applied to the wheel mounting flange 6.

The constant velocity universal joint 31 comprises the outer joint member 37, the joint inner ring 18, the cage 19 and torque transmitting balls 20. The outer joint member 37 is made of medium/high carbon steel including carbon of 0.40~0.80 % by weight such as S53C and integrally formed by a cup shaped mouth portion 21, shoulder 38 forming a bottom of the mouth portion 21, and a cylindrical shaft portion 23 axially extending from the shoulder 38. The shaft portion 23 is formed by a spigot portion 23a fitted into the cylindrical portion 29b of the hub wheel 29 via a predetermined radial gap and a fitting portion 23b at the end of the spigot portion 23a.

An outer circumferential surface of the shoulder 38 is formed with the other (inner side) tapered inner raceway surface 37a opposed to the other of the double row outer raceway surface 32a, 32a. The track grooves 21a and a region including a seal fitted portion to which an inner side seal 24 sliding contacts, the inner raceway surface 37a and the shaft portion 23 are hardened by the high frequency induction heating as having a surface hardness of 58-64 HRC.

A plurality of the double row tapered rollers 34, 35 are contained between the double row outer raceway surfaces 32a, 32b of the outer member 32 and the double row inner raceway surfaces 29a, 37a opposite to the double row outer raceway surfaces 32a, 32b and held freely rollably therein by the cages 39, 40. The seals 36, 24 are mounted on both ends of the outer member 32 and prevent leakage of grease contained in the bearing and entering of rain water and dusts into the bearing from outside. The double row rolling bearing 30 forms a so-called back-to-back double row tapered roller bearing in which smaller the distance of line of action of force applied to both raceway surfaces 32a, 29a and 32b, 37a from the axial center, larger the distance between the rollers in their axial direction.

In the present embodiment a pitch circle diameter PCDi of the inner side rolling elements 35 is larger than a pitch circle diameter PCDo of the outer side rolling elements 34. Since specifications of these rolling elements 34, 35 are same, the number of the inner side rolling elements 35 is larger than that of the outer side rolling elements 34. In this case the specifications of the rolling elements 34, 35 denote the length of roller, the outer diameter of roller, the inclination angle of roller, and the radius of curvature of the larger end of roller. In a case of such double row tapered roller bearing, if desiring to differentiate the pitch circle diameters PCDo and PCDi without changing the specifications such as the inclination angle of roller or the radius of curvature, the inclination angles of the inner side and outer side raceway surfaces have to be differentiated. In the present embodiment it is possible to avoid erroneous assembly, to reduce the manufacturing cost and to reliability of the bearing by setting the specifications of the double row rollers 34, 35.

Due to the difference of the pitch circle diameters PCDo, PCDi, the diameter of the inner raceway surface 37a of the outer joint member 37 is larger than that of the inner raceway surface 29a of the hub wheel 29 in the inner member 33. On the other hand, due to the difference of the pitch circle diameters PCDo, PCDi, the diameter of the inner side outer raceway surface 32b is larger than that of the outer side outer raceway surface 32a in the outer member 32.

In the wheel bearing apparatus of such a structure, since the inner side inner raceway surface 37a is directly formed on the outer circumferential surface of the shoulder 38 of the outer joint member 37, it is possible to set the pitch circle diameter PCDi of the inner side rollers 35 larger than the pitch circle diameter PCDo of the outer side rollers 34 and to set the number of the inner side rollers 35 larger than that of the outer side rollers 34. Accordingly it is possible to reduce the weight and size of the bearing apparatus and to extend the life of the bearing apparatus due to increase of the bearing rigidity of the inner side as compared with that of the outer side.

Although it is shown the structure in which the large flange for guiding the rolling elements (tapered rollers) 34, 35 is formed on the inner member 33 (i.e. the hub wheel 29 and the outer joint member 37), it may be possible to form the large flange on the outer member 32 similarly to the previous embodiments since the falling out of the rolling elements 34, 35 radially inward can be prevented by the cages 39, 40.

Then a method for uniting the hub wheel 29, the double row rolling bearing 30 and the constant velocity universal joint 31 will be described. Firstly the double row rolling elements i.e. tapered rollers are temporarily assembled on the double row outer raceway surfaces 32a, 32b of the outer member 32 via the cages 39, 40 and seals 36, 24 are mounted on the both ends of the outer member 32. Then the shaft portion 23 of the outer joint member 37 is inserted into the hub wheel 29 from the inner side until the shoulder 38 of the outer joint member 37 abuts the end face of the cylindrical portion 29b of the hub wheel 29. Finally an expanding tool such as a mandrel is pushed into a bore of a fitting portion 23b of the shaft portion 23 to radially expand the fitting portion 23b in order to bite the outer circumferential surface of the fitting portion 23b into the irregular portions 17 of the hub wheel 29. Thus the hub wheel 29 and the outer joint member 37 are integrally united via plastic deformation of the fitting portion 23b. This structure enables to eliminate necessity to control the amount of pre-load by fastening the outer joint member using a nut in the prior art and thus it is possible to reduce the weight and size of the bearing apparatus and increase the strength and durability of the hub wheel 29 and to keep the amount of pre-load for a long term.

In the double row rolling bearing 30 comprising double row tapered rollers, it is difficult to keep a stable inside gap of the bearing during the radially enlarging and caulking step. That is, the tapered rollers 34, 35 tend to rub the raceway surfaces along their generating lines during assembly of the bearing. Accordingly, lubricant such as grease would be expelled from the line contacting region and cause metal-to-metal contact and thus increase the frictional coefficient in the contacting portions. Thus it is afraid that the tapered rollers 34, 35 would not smoothly move toward the large flanges and therefore would be assembled in a misaligned condition. For example the inside gap would be a positive gap when a negative gap has to be obtained and thus there would be caused a case in which a desirable pre-load cannot be applied. This would be further remarkable when the center line of tapered rollers 34, 35 is inclined relative to its ordinal rotation axis, i.e. when a so-called skew is generated.

In order to avoid such a problem, the plastic deformation connection in the radially enlarging and caulking step is carried out with causing a relative swing motion (reciprocal motion) or a rotation (one way rotation) between the hub wheel 29 and outer joint member 37 and the outer member 32 in the present embodiment. In practice the hub wheel 29 and the shaft portion 23 of the outer joint member 37 are united via plastic deformation by inserting the enlarging tool into the shaft portion 23 with the outer member 32 being reciprocated relative to the hub wheel 29 under a condition of supporting the hub wheel 29 on a top surface of a working bench. This enables the double row tapered rollers 34, 35 to smoothly slide on the raceway surfaces and to be stably aligned to the large flanges. Accordingly a predetermined pre-load can be applied accurately.

Although it is shown that the hub wheel 29 and the outer joint member 37 are united via plastic deformation by deforming the shaft portion of the outer joint member radially outward, it is also possible to unite the hub wheel 29 and the outer joint member 37 by inserting the shaft portion of the outer joint member into the hub wheel and by plastically deforming the end of the shaft portion to a direction other than radially outward to form a caulking portion in order to axially secure the hub wheel and the outer joint member (i.e. a so-called swing caulking method).

### Fourth embodiment

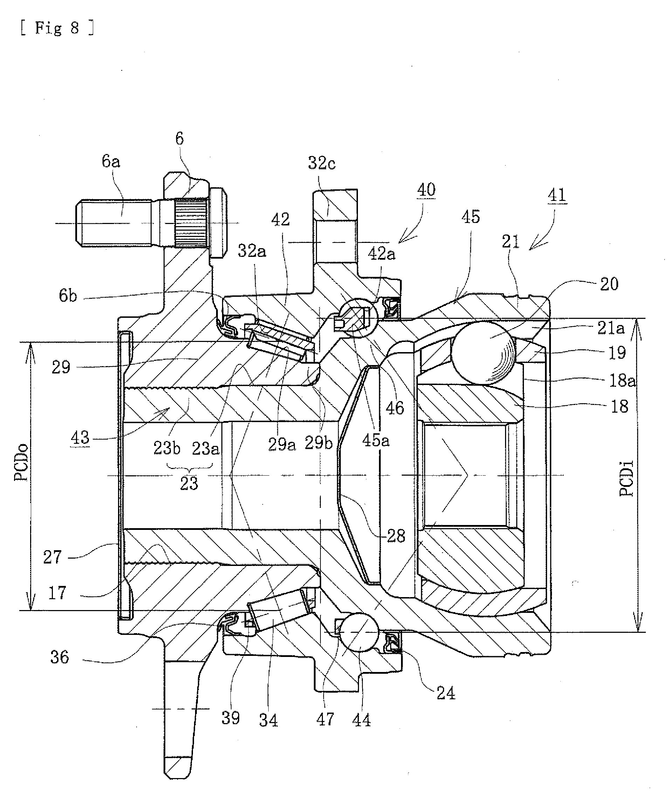

Fig. 8 is a longitudinal section view showing a fourth embodiment of the bearing apparatus for a wheel of vehicle of the present invention. Since the present embodiment is different from the third embodiment (Fig. 7) only in the structure of the inner side bearing array, same reference numerals are used herein for designating same parts as those having same functions used in the previous embodiments and detailed explanation thereof will be omitted.

This wheel bearing apparatus is formed as a unit of a hub wheel 29, a double row rolling bearing 40 and a constant velocity universal joint 41. A double row rolling bearing 40 comprises an outer member 42, an inner member 43, and double row rolling elements 34, 44. The inner member 43 comprises the hub wheel 29 and an outer joint member 45 fitted into the hub wheel 29.

The outer member 42 is made of medium/high carbon steel including carbon of 0.40~0.80 % by weight such as S53C and is integrally formed on its outer circumferential surface with a body mounting flange 32c and on its inner circumferential surface with an outer side tapered outer raceway surface 32a and an inner side circular arc outer raceway surface 42a. These double row outer raceway surfaces 32a, 42a are hardened by high frequency induction quenching so as to have a surface hardness of 58-64 HRC.

The outer joint member 45 of the constant velocity universal joint 41 is made of medium/high carbon steel including carbon of 0.40~0.80 % by weight such as S53C and integrally formed with a cup shaped mouth portion 21, a shoulder 46 forming a bottom of the mouth portion 21, and a cylindrical shaft portion 23 axially extending from the shoulder 46. An inner side inner raceway surfaces 45a is directly formed on the outer circumferential surface of the shoulder 46 oppositely to the outer raceway surface 42a of the outer member 42. A plurality of rolling elements 34, 44 are contained between the double row outer raceway surfaces 32a, 42a of the outer member 42 and the double row inner raceway surfaces 29a, 45a of the inner member 43 and held freely rollably by cages 39, 47.

In the present embodiment the pitch circle diameter PCDi of the inner side rolling elements (balls) 44 is set larger than the pitch circle diameter PCDo of the outer side rolling elements (tapered rollers) 34. Due to the difference of the pitch circle diameters PCDo, PCDi, the number of the inner side rolling elements 44 may be set larger than that of the outer side rolling elements 34.

In the wheel bearing apparatus having such a structure since the inner side bearing array is formed by the rolling elements comprising balls and the inner side inner raceway surfaces 45a is directly formed on the outer circumferential surface of the shoulder 46 of the outer joint member 45, it is possible to set the pitch circle diameter PCDi of the inner side rolling elements 44 larger than the pitch circle diameter PCDo of the outer side rolling elements 34 and the number of the inner side rolling elements 44 is set larger than that of the outer side rolling elements 34. Accordingly it is possible to further reduce the axial size of the bearing apparatus with keeping the loading capacity of the double row bearing arrays or balance of the rigidity of the bearing apparatus.

### Fifth embodiment

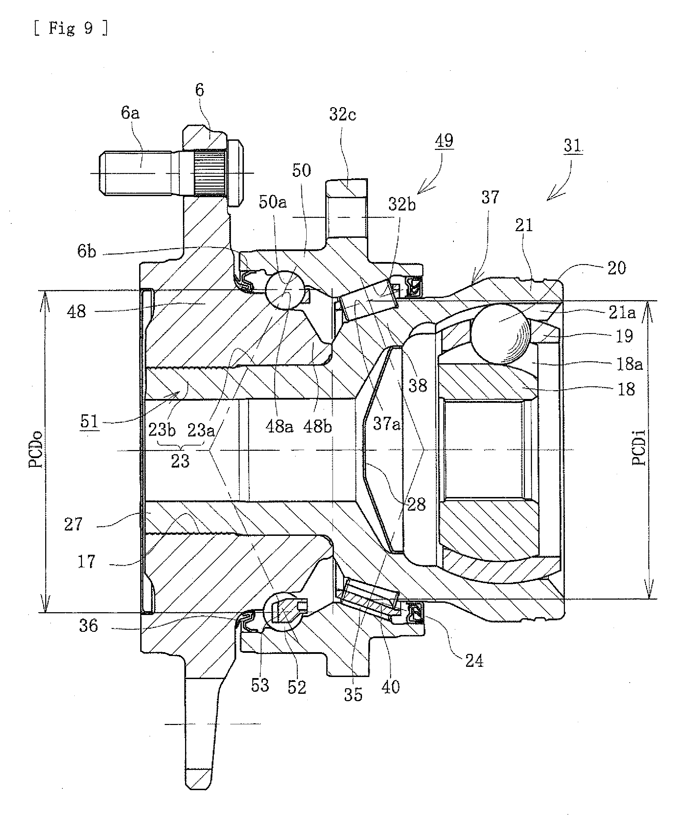

Fig. 9 is a longitudinal section view showing a fifth embodiment of the bearing apparatus for a wheel of vehicle of the present invention. Since the present embodiment is different from the fourth embodiment (Fig. 8) only in the structure of the left and right bearing arrays, same reference numerals are used herein for designating same parts as those having same functions used in the previous embodiments and detailed explanation thereof will be omitted.

This wheel bearing apparatus is formed as a unit of a hub wheel 48, a double row rolling bearing 49 and a constant velocity universal joint 31. A double row rolling bearing 49 comprises an outer member 50, an inner member 51, and double row rolling elements 52, 35. The inner member 51 comprises the hub wheel 48 and an outer joint member 37 fitted into the hub wheel 48.

The outer member 50 is made of medium/high carbon steel including carbon of 0.40~0.80 % by weight such as S53C and is integrally formed on its outer circumferential surface with a body mounting flange 32c and on its inner circumferential surface with an outer side circular arc outer raceway surface 50a and an inner side tapered outer raceway surface 32a. These double row outer raceway surfaces 50a, 32a are hardened by high frequency induction quenching so as to have a surface hardness of 58-64 HRC.

The hub wheel 48 is made of medium/high carbon steel including carbon of 0.40~0.80 % by weight such as S53C and is formed with one (outer side) circular arc inner raceway surface 48a and a cylindrical portion 48b axially extending from the inner raceway surface 48a. The hub wheel 48 is hardened by high frequency induction quenching so that a region including the base 6b to which the outer side seal 36 sliding contacts, inner raceway surface 48a and the cylindrical portion has surface hardness of 58-64 HRC.

Double row rolling elements 52, 35 are contained between the double row outer raceway surfaces 50a, 32b of the outer member 50 and the double row inner raceway surfaces 48a, 37a opposite to the double row outer raceway surfaces 50a, 32b and held freely rollably therein by the cages 53, 40.

In the present embodiment the pitch circle diameter PCDo of the outer side rolling elements (balls) 52 is set larger than the pitch circle diameter PCDi of the inner side rolling elements (tapered rollers) 35. Due to the difference of the pitch circle diameters PCDo, PCDi, the number of the outer side rolling elements 52 may be set larger than that of the outer side rolling elements 35.

In the wheel bearing apparatus having such a structure since the outer side bearing array is formed by the rolling elements comprising balls 52 and the pitch circle diameter PCDo of the outer side rolling elements 52 is set larger than the pitch circle diameter PCDi of the inner side rolling elements 35 and the number of the outer side rolling elements 52 is set larger than that of the inner side rolling elements 35, it is possible to reduce the axial size of the bearing apparatus with keeping the loading capacity of the double row bearing arrays or balance of the rigidity of the bearing apparatus.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industries

The bearing apparatus for a wheel of vehicle of the present invention can be applied to the wheel bearing apparatus of third or fourth generation in which the inner raceway surface is directly formed on the outer circumferential surface of the hub wheel.

### BRIEF DESCRIPTION OF THE DRAWINGS

Fig. 1 is a longitudinal section view showing a first embodiment of the bearing apparatus for a wheel of vehicle of the present invention;
Fig. 2 is a partially enlarged view of Fig. 1;
Fig. 3 is an enlarged cross sectional view taken along a line III-III of Fig. 2;
Fig. 4 is a longitudinal section view showing a second embodiment of the bearing apparatus for a wheel of vehicle of the present invention;
Fig. 5 is a partially enlarged view of Fig. 4;
Fig. 6 is an explanatory view showing a method for assembling the bearing apparatus for a wheel of vehicle of Fig. 4;
Fig. 7 is a longitudinal section view showing a third embodiment of the bearing apparatus for a wheel of vehicle of the present invention;
Fig. 8 is a longitudinal section view showing a fourth embodiment of the bearing apparatus for a wheel of vehicle of the present invention;
Fig. 9 is a longitudinal section view showing a fifth embodiment of the bearing apparatus for a wheel of vehicle of the present invention;
Fig. 10 is a longitudinal section view showing a bearing apparatus for a wheel of vehicle of the prior art ; and
Fig. 11 is an enlarged cross sectional view showing a tapered roller assembly of Fig. 10.

### Description of the Symbols

- 1, 15, 33, 43, 51: inner member
- 2, 32, 42, 50: outer member
- 2a, 32a, 32b, 42a, 50a: outer raceway surface
- 2b: large flange
- 3, 34, 35: tapered rollers,
- 4, 12, 29, 48: hub wheel
- 4a, 5a, 16a, 29a, 37a, 45a, 48a: inner raceway surface
- 4b, 12a, 29b, 48b: cylindrical portion
- 4c: serration
- 5: inner ring
- 6: wheel mounting flange
- 6a: hub bolts
- 6b: base
- 7, 39, 40, 47, 53: cages
- 8, 9, 24, 36: seal
- 10: pockets
- 11: posts
- 13, 30, 40, 49: double row rolling bearing
- 14, 31, 41: constant velocity universal joint
- 16, 37, 45: outer joint member
- 17: irregular portion
- 18: joint inner ring
- 18a, 21a: track grooves
- 19: cage
- 20: torque transmitting balls
- 21: mouth portion
- 22, 38, 46: shoulder
- 23: shaft portion
- 23a: spigot portion
- 23b: fitting portion
- 25: slinger
- 25a: cylindrical portion
- 25b: standing portion
- 26: sealing plate
- 26a: metal core
- 26b: sealing member
- 26c, 26d: side lips
- 26e: radial lip
- 27, 28: end caps
- 60: bearing apparatus
- 61: outer member
- 61a: outer raceway surface
- 61b: body mounting flange
- 62: hub wheel
- 62a, 64a: inner raceway surfaces
- 62b: cylindrical portion
- 62c: serration
- 62d, 64b: large flange
- 63: wheel mounting flange
- 64: inner ring
- 65: inner member
- 66: tapered roller
- 67: cage
- 68, 69: seal
- 70: hub bolts
- 71: pocket
- 72: posts
- 72a: radially outward portions
- 72b: radially inward projections
- W: entrance width

## Claims

1. A bearing apparatus for a wheel of vehicle of a type of back-to-back double row tapered roller bearing comprising:
an outer member integrally formed on its outer surface with a body mounting flange to be mounted on a suspension apparatus of vehicle and also formed on its inner surface with double row outer raceway surfaces tapered open respectively axially inward and outward;an inner member including a hub wheel and an inner ring or an outer joint member of a constant velocity universal joint, the hub wheel having a wheel mounting flange integrally formed therewith at one end thereof and one inner raceway surface formed on the outer circumferential surface thereof arranged oppositely to one of the double row outer raceway surfaces and a cylindrical portion axially extending from said inner raceway surface, said inner ring or the outer joint member of a constant velocity universal joint being press fitted on the cylindrical portion and formed on its outer circumferential surface with the other inner raceway surface arranged opposite to the other raceway surface of the double row outer raceway surfaces; double row tapered rollers freely rollably held between the outer and inner raceway surfaces by cages; and seals arranged in annular openings formed by the outer and inner members at both ends thereof **characterized in: that** said cages are formed of synthetic resin by injection molding; that posts between pockets of the cages are arranged to be positioned radially inward the pitch circle diameter of the tapered rollers; and that the width of an opening of radially inward of each pocket is set so that each tapered roller is held within the pocket with contacting tapered surfaces of the posts opened radially outward so as not to be fallen out radially inward.

2. A bearing apparatus for a wheel of vehicle of a type of back-to-back double row tapered roller bearing comprising:
an outer member integrally formed on its outer surface with a body mounting flange to be mounted on a suspension apparatus of vehicle and also formed on its inner surface with double row outer raceway surfaces tapered open respectively axially inward and outward; an inner member including a hub wheel and an inner ring or an outer joint member of a constant velocity universal joint, the hub wheel having a wheel mounting flange integrally formed therewith at one end thereof and one inner raceway surface formed on the outer circumferential surface thereof arranged oppositely to one of the double row outer raceway surfaces and a cylindrical portion axially extending from said inner raceway surface, said inner ring or the outer joint member of a constant velocity universal joint being press fitted on the cylindrical portion and formed on its outer circumferential surface with the other inner raceway surface arranged opposite to the other raceway surface of the double row outer raceway surfaces; double row tapered rollers freely rollably held between the outer and inner raceway surfaces by cages; and seals arranged in annular openings formed by the outer and inner members at both ends thereof **characterized in:**
**that** said cages are formed of synthetic resin by injection molding; that the tapered rollers are held within the pocket so as not to be fallen out radially inward; and that larger flanges for guiding the tapered rollers are integrally formed on larger diameter sides of the outer raceway surfaces of the outer member.

3. A bearing apparatus for a wheel of vehicle formed as a unit of a hub wheel, a rolling bearing and a constant velocity universal joint comprising:
an outer member formed on its inner surface with double row outer raceway surfaces; an inner member including the hub wheel and the outer joint member of the constant velocity universal joint, the hub wheel having a wheel mounting flange integrally formed therewith at one end thereof and
one inner raceway surface formed on the outer circumferential surface thereof arranged oppositely to one of the double row outer raceway surfaces and a cylindrical portion axially extending from said inner raceway surface, said outer joint member being fitted into the hub wheel and
formed on its outer circumferential surface with the other inner raceway surface arranged opposite to the other raceway surface of the double row outer raceway surfaces and having a shaft portion axially extending from said other inner raceway surface; and double row rolling elements freely rollably held between the outer and inner raceway surfaces **characterized in: that** a pitch circle diameter of outer side rolling elements of the double row rolling elements is different from that of inner side rolling elements of the double row rolling elements; and
that the number of the rolling elements in the larger pitch circle diameter is set larger than that of the rolling elements in the smaller pitch circle diameter.

4. A bearing apparatus for a wheel of vehicle of any one of claims 1-3 wherein the inner member comprises the hub wheel and the outer joint member fitted into the hub wheel; wherein the outer joint member is integrally formed of a cup-shaped mouth portion, a shoulder portion on which outer circumferential surface said other inner raceway surface is directly formed, and a shaft portion axially extending from the shoulder portion, and wherein the hub wheel and the outer joint member are united by plastically deforming a hollow end of the shaft portion and caulking it on the hub wheel.

5. A bearing apparatus for a wheel of vehicle of claim 4 wherein the hub wheel and the outer joint member are united by expanding radially outward the hollow end of the shaft portion of the outer joint member and biting it into a hardened irregular portion formed on an inner circumferential surface of the hub wheel.

6. A bearing apparatus for a wheel of vehicle of claim 1 or 2 wherein the inner member comprises the hub wheel and the inner ring press fitted on the cylindrical portion of the hub wheel via a predetermined interference, and wherein an inner side base portion of the wheel mounting flange is rounded and its surface on which the seal is directly contact is hardened.

7. A bearing apparatus for a wheel of vehicle of any one of claims 1~6 wherein at least an inner side seal comprises a slinger press fitted onto the inner member, and an annular sealing plate including a metal core press fitted into the outer member and a sealing member integrally adhered to the metal core via vulcanized adhesion, and wherein each of the slinger and the metal core has a substantially "L" shaped cross section and they are arranged oppositely toward each other so that the sealing member slidingly contacts the slinger.

8. A bearing apparatus for a wheel of vehicle of claim 3 wherein at least the rolling elements of the smaller pitch circle diameter of the double row rolling elements are tapered rollers.

9. A bearing apparatus for a wheel of vehicle of claim 3 wherein the double row rolling elements are tapered rollers each having same specifications.

10. A bearing apparatus for a wheel of vehicle of claim 3 wherein the rolling elements of the larger pitch circle diameter of the double row rolling elements are balls.
